(19) Europäisches Patentamt / European Patent Office / Office européen des brevets

(11) **EP 2 837 150 B1**

(12) **FASCICULE DE BREVET EUROPEEN**

(45) Date de publication et mention de la délivrance du brevet:
**22.03.2017 Bulletin 2017/12**

(21) Numéro de dépôt: **13715382.1**

(22) Date de dépôt: **27.03.2013**

(51) Int Cl.:
*H04L 27/26* (2006.01)    *H04B 10/2575* (2013.01)

(86) Numéro de dépôt international:
**PCT/FR2013/050660**

(87) Numéro de publication internationale:
**WO 2013/153305 (17.10.2013 Gazette 2013/42)**

(54) **SYNCHRONISATION DE FRÉQUENCE POUR UN RÉCEPTEUR OPTIQUE OFDM**

FREQUENZ-SYNCHRONISATION FÜR EINEN OPTISCHEN OFDM-EMPFÄNGER

FREQUENCY SYNCHRONIZATION FOR AN OPTICAL OFDM RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2012 FR 1253270**

(43) Date de publication de la demande:
**18.02.2015 Bulletin 2015/08**

(73) Titulaire: **Orange**
**75015 Paris (FR)**

(72) Inventeurs:
• **KARAKI, Julie**
**Mont Liban (LB)**
• **PINCEMIN, Erwan**
**F-22290 Gommenec'h (FR)**

(74) Mandataire: **Vidon Brevets & Stratégie**
**16B, rue de Jouanet**
**B.P. 90333**
**Technopole Atalante**
**35703 Rennes Cedex 7 (FR)**

(56) Documents cités:
**EP-A1- 2 079 212     EP-A2- 0 920 163**
**EP-A2- 2 278 768     US-A1- 2011 002 422**

• **Qi Yang, Abdullah Al Amin and William Shieh: "Optical OFDM Basics"; "Chapter 2" In: S. Kumar (Ed.): "Impact of Nonlinearities on Fiber Optic Communications", 1 décembre 2011 (2011-12-01), Springer, XP002699541, ISBN: 978-1-4419-8138-7 pages 43-85, page 58, section 2.3.6, 2. paragraph, line 1 - page 59, line 3 pages 59 - 60, section 2.4**

EP 2 837 150 B1

**Description**

## 1. **Domaine de l'invention**

Le domaine de l'invention est celui des transmissions mettant en oeuvre une modulation multiporteuse. Plus précisément, l'invention concerne la réception et le traitement de signaux multiporteuses ayant subis un décalage en fréquence entre l'émission et la réception. L'invention trouve notamment des applications dans les systèmes de transmission optique mettant en oeuvre un multiplexage en longueur d'onde (en anglais WDM pour « Wavelength Division Multiplexing ») longue distance (en anglais « long-haul »), utilisant la modulation OFDM (en anglais « Orthogonal Frequency Division Multiplexing ») avec détection cohérente hétérodyne.

## 2. **Art antérieur**

L'OFDM est une technique de modulation multiporteuse bien connue dans le domaine des transmissions radio, et le traitement du signal multiporteuse relatif à son implémentation a déjà été largement étudié.

En particulier, on a constaté que la modulation OFDM présente de bonnes propriétés pour les transmissions optiques WDM à ultra haut débit, au-delà de 100 Gbps. Il s'agit en effet d'une modulation intrinsèquement robuste à la dispersion chromatique et à la dispersion modale de polarisation, qui permet d'atteindre une efficacité spectrale très élevée.

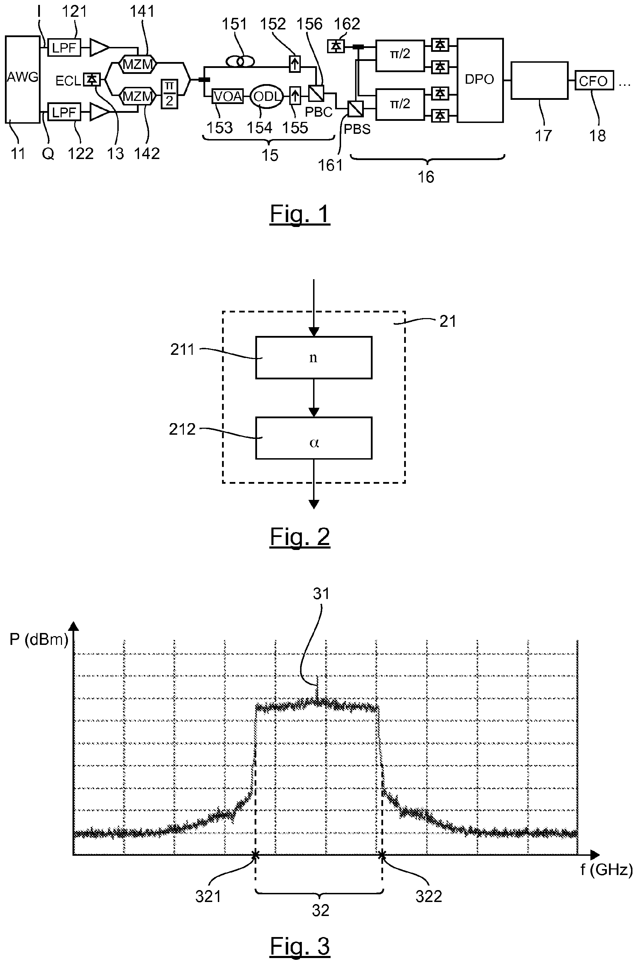

La figure 1 illustre ainsi une chaîne de transmission optique mettant en oeuvre une modulation OFDM avec détection cohérente hétérodyne.

Côté émission, le signal OFDM est généré par un générateur de forme d'ondes aléatoires 11 (en anglais AWG pour « Arbitrary Waveform Generator »). Un tel générateur 11 comprend notamment deux modules de conversion numérique-analogique permettant de transférer dans le domaine analogique les deux composantes (en phase et en quadrature) du signal OFDM générées dans le domaine numérique. De plus, afin d'éviter le problème de recouvrement de spectre (ou « aliasing » en anglais) à la sortie des convertisseurs numériques analogiques du générateur 11, un sur-échantillonnage (ou « oversampling » en anglais) est réalisé : il consiste à annuler les fréquences situées aux bords de la bande OFDM, en modulant certaines sous-porteuses par une valeur nulle. Le signal OFDM mis en forme est généré dans le domaine temporel grâce à une transformée de Fourier rapide inverse (en anglais IFFT pour « Inverse Fast Fourier Transform »), puis divisé en partie réelle (I) et imaginaire (Q). Grâce aux deux convertisseurs numériques analogiques du générateur 11, les deux composantes I et Q du signal OFDM sont convertis en signaux continus.

Après filtrage par un filtre passe-bas (LPF pour « Low Pass Filter », 121 et 122), les deux composantes I et Q du signal OFDM sont optiquement combinés au moyen d'un modulateur IQ sur une porteuse optique, le laser d'émission (ECL pour « External Cavity Laser » 13). Ce dernier est composé de deux modulateurs de type Mach-Zehnder (MZM 141 et 142) disposés en parallèle dans une superstructure Mach-Zehnder dont la différence de phase est de 90°. Cela nécessite le réglage de trois tensions de polarisation (Vbias) : la première tension sert à régler la différence de phase de 90° entre les deux bras de la superstructure précédemment définie, et les deux autres tensions permettent de régler les deux modulateurs Mach-Zehnder sur leur point de transmission nulle. Classiquement, le bon réglage des tensions de polarisation Vbias des deux modulateurs Mach-Zehnder est réalisé grâce à l'observation du spectre du signal OFDM sur un analyseur de spectre optique à très forte résolution (20 MHz), et consiste à supprimer la porteuse optique de la bande OFDM.

Malheureusement, il n'est pas toujours possible de régler les modulateurs Mach-Zehnder au point de transmission nulle, de sorte qu'un résidu de porteuse optique subsiste au milieu de la bande OFDM, ou bien peut être produit par une petite variation des tensions de polarisation Vbias des modulateurs Mach-Zehnder (permettant de dérégler légèrement le modulateur IQ par rapport à son point de fonctionnement optimal), sans pour autant induire une dégradation de la performance du système.

Selon une variante, il est possible de générer une composante radiofréquence spécifique au niveau de l'émetteur OFDM, encore appelée pilote RF (les sous-porteuses OFDM localisées à l'endroit du pilote RF étant annulées), qui sert essentiellement à compenser le bruit de phase des lasers d'une manière directe et efficace. Pratiquement, ce pilote RF est généré au moyen de l'ajout d'une composante continue ou « DC offset » sur les composantes en phase I et en quadrature Q avant d'entrer sur les deux modulateurs Mach-Zehnder.

Le signal optique subit alors un multiplexage en longueur d'onde 15, mettant en oeuvre, sur une première branche :

- un décalage d'un temps symbole 151,
- un premier polariseur 152 ;

et sur une deuxième branche :

- un atténuateur variable optique 153 (en anglais VOA pour « Variable Optical Attenuator) ;
- une ligne à retard 154 (en anglais ODL pour « Optical Delay Line ») ;
- un deuxième polariseur 155 ;

et un combinateur de faisceau de polarisation 156 (en anglais PBC pour « Polarization Beam Combiner »).

Le signal émis est donc un signal OFDM multiplexé en polarisation.

Côté réception, une détection cohérente hétérodyne est mise en oeuvre.

Plus précisément, le signal optique subit un démultiplexage en longueur d'onde 16, mettant en oeuvre un séparateur de faisceau de polarisation 161 (en anglais PBS pour « Polarization Beam Splitter ») et un oscillateur local 162 présentant la même longueur d'onde que celle du laser à l'émission mais indépendant de ce dernier, permettant ainsi la détection du signal OFDM.

Les quatre composantes du signal multiplexé en polarisation obtenues en sortie du séparateur de faisceau de polarisation 161 et du couplage avec l'oscillateur local 162 sont filtrées et transformées en des signaux analogiques, grâce à un oscilloscope à échantillonnage ultra-rapide (DPO pour « Digital Phosphore Oscilloscope ») et au réglage de la bande passante des quatre convertisseurs analogiques numériques de l'oscilloscope.

Le signal numérique obtenu en sortie du DPO est alors synchronisé 17, et le décalage en fréquence du signal après synchronisation est estimé et compensé 18 dans un module de compensation du décalage en fréquence CFO (en anglais « Carrier Frequency Offset Compensation »). Ce décalage en fréquence entre le laser à l'émission et celui à la détection résulte de l'utilisation d'une détection cohérente (et non directe). En effet, la détection cohérente hétérodyne (bien adaptée à la transmission WDM longue distance, on le rappelle), repose sur le fait que le signal émis est détecté par un oscillateur local différent du laser d'émission mais ayant à peu près la même fréquence que celle du laser d'émission.

L'estimation du décalage en fréquence est une étape capitale à implémenter. En effet, une erreur sur l'estimation de ce décalage peut se traduire par des interférences inter-porteuses ou bien par une dégradation complète de la performance du système.

Or la détermination, puis la compensation, de ce décalage en fréquence entre le signal multiporteuse reçu et l'oscillateur local dans les systèmes optiques mettant en oeuvre une modulation OFDM avec détection cohérente est difficile à mettre en oeuvre, en raison des valeurs importantes que peut atteindre ce décalage, qui peut être largement supérieur à l'espacement inter-porteuses du signal multiporteuse.

Plusieurs solutions ont été proposées dans l'état de la technique pour estimer ce décalage en fréquence, présentées ci-après , par exemple EP2079212, US2011/002422.

On considère pour ce faire un signal multiporteuse d'émission $x(t)$, tel que :

$$x(t) = \sum_{k=1}^{N_{Sc}} c_k e^{j2\pi f_k t},$$

avec :

$N_{Sc}$ le nombre de porteuses du signal multiporteuse d'émission ;
$c_k$ le symbole de constellation porté par la porteuse $f_k$.

Le signal multiporteuse reçu $y(t)$, affecté au cours de la transmission par un décalage en fréquence, peut s'exprimer de la façon suivante :

$$y(t) = e^{j2\pi \Delta_{CFO} \cdot t} \sum_{k=1}^{N_{Sc}} c_k e^{j2\pi f_k t}$$

avec :

$\Delta_{CFO}$ le décalage en fréquence que l'on cherche à estimer.

La représentation temporelle numérique correspondante peut s'exprimer sous la forme suivante :

$$y_p = e^{j2\pi\Delta_{CFO}\cdot\frac{p.T_s}{N_{Sc}}} \sum_{k=1}^{N_{Sc}} c_k e^{j2\pi f_k\cdot\frac{p.T_s}{N_{Sc}}},$$

avec :

$p$ l'indice d'un échantillon temporel du signal multiporteuse reçu ;
$T_s$ le temps d'un symbole OFDM.

En notant $\varepsilon = \Delta_{CFO} \times T_s$ et $\Delta_{CFO} \times \frac{T_s}{N_{Sc}}$ le décalage en fréquence relatif, on peut encore écrire :

$$y_p = e^{j2\pi.\frac{p.\epsilon}{N_{Sc}}} \sum_{k=1}^{N_{Sc}} c_k e^{j2\pi f_k.\frac{p.T_s}{N_{Sc}}}.$$

Selon une première solution proposée dans l'état de la technique, l'estimation du décalage en fréquence se base sur la comparaison de symboles OFDM qui portent les mêmes informations à l'émission.

Ainsi, on compare le signal reçu correspondant à l'émission de deux symboles OFDM identiques, notés $x_{1p}$ et $x_{2p}$ :

$$y_p = e^{j2\pi.\frac{p.\epsilon}{N_{Sc}}} \sum_{k=1}^{N_{Sc}} c_k e^{j2\pi f_k.\frac{p.T_s}{N_{Sc}}} = e^{j2\pi.\frac{p.\epsilon}{N_{Sc}}} \times x_{1p}$$

$$y_{p+K} = e^{j2\pi.\frac{(p+K).\epsilon}{N_{Sc}}} \sum_{k=1}^{N_{Sc}} c_k e^{j2\pi f_k.\frac{p.T_s}{N_{Sc}}} = e^{j2\pi.\frac{(p+K).\epsilon}{N_{Sc}}} \times x_{2p} = e^{j2\pi.\frac{(p+K).\epsilon}{N_{Sc}}} \times x_{1p}$$

avec :

- $K$ le nombre d'échantillons dans les symboles à comparer ; et
- $p$ l'indice de l'échantillon.

Alors, on peut écrire :

$$y_p^* y_{p+K} = |x_{1p}|^2 \times e^{j2\pi.\frac{K.\epsilon}{N_{Sc}}}$$

et on peut déduire $\epsilon$ :

$$\epsilon = \frac{1}{2\pi}.\frac{N_{Sc}}{K} \arg(\textstyle\sum_{p=1}^{p=K} y_p^* y_{p+K}) \qquad \text{équation (1).}$$

Dans ce cas, $\epsilon = \frac{1}{2\pi} \arg(\sum_{p=1}^{p=K} y_p^* y_{p+K})$ car $K = N_{Sc}$ et $-\pi \leq \arg\left(\sum_{p=1}^{p=K} y_p^* y_{p+K}\right) \leq \pi$.

La marge d'acquisition de $\epsilon$ est donc limitée à $\pm 0,5$, ce qui n'est pas toujours suffisant pour estimer correctement le décalage en fréquence, notamment lorsque l'on se place dans un contexte de transmission WDM longue distance.

Partant de l'observation que selon l'équation (1), lorsque le nombre d'échantillons $K$ est divisé par 2, la marge d'acquisition est multipliée par 2, une autre technique a été proposée par F. Buchali et al. dans le document « Improved frequency offset correction in coherent optical OFDM systems », ECOC 2008, papier Mo.4.D.4, Vol. 1, pp. 105-106, Bruxelles, 2008. Cette technique repose sur l'idée de diviser un symbole OFDM en $K$ sous-symboles portant tous la même information, et ainsi multiplier la plage d'acquisition par $K$.

Plus précisément, F. Buchali a choisi, dans un premier temps, de diviser un symbole OFDM en des sous-symboles afin d'estimer grossièrement le décalage en fréquence selon la méthode décrite ci-dessus, puis, dans un deuxième temps, d'affiner l'estimation du décalage en fréquence grâce à une méthode de filtrage du pilote RF et un traitement du signal dédié. Ce traitement du signal dédié consiste, après extraction du pilote RF par un filtre, à déterminer la phase du pilote RF, selon l'équation $\phi = 2\pi\Delta_{CFO}t + \Delta\phi$ (avec $\Delta\phi$ le bruit de phase), afin de pouvoir compenser d'un seul coup le résidu du décalage en fréquence et le bruit de phase qui affecte le signal utile.

On note toutefois que selon cette technique, le décalage en fréquence ne peut pas être décorrélé du bruit de phase. Il faut donc que la correction grossière du décalage en fréquence ramène le pilote RF dans la plage d'acquisition fréquentielle du filtre de sélection du pilote RF. Comme ce filtre de sélection a une largeur fixe de quelques $\Delta f$ (3 ou $4\Delta f$), il faut que l'estimation grossière du décalage en fréquence soit précise à 3 ou 4 $\Delta f$ près.

Cette technique souffre donc de plusieurs inconvénients, comprenant notamment :

- l'ajout d'un symbole OFDM dédié, qui gaspille du débit utile ;
- l'extinction des sous-porteuses qui sont contenues dans le filtre de sélection du pilote RF, soit 4 ou 5 sous-porteuses utiles, ce qui encore une fois conduit à gaspiller du débit utile ;
- les algorithmes d'estimation grossière du décalage en fréquence, basés sur la subdivision d'un symbole OFDM en plusieurs sous-symboles, qui sont complexes à implémenter et donc coûteux en puissance de calcul.

D'autres techniques ont également été proposées, uniquement adaptées à la détermination de petites valeurs du décalage en fréquence (inférieures à $5\Delta f$). Par ailleurs, dans les systèmes de transmission WDM, le bruit de phase introduit par les lasers (laser d'émission et oscillateur local) et par la ligne de transmission (bruit lié à l'émission spontanée « ASE » et effets non-linéaires) est important, et peut empêcher ces techniques de fonctionner quelque soit la valeur de ce décalage en fréquence.

Il existe donc un besoin pour une nouvelle technique d'estimation du décalage en fréquence, qui soit performante quelque soit la valeur du décalage en fréquence.

### 3. Exposé de l'invention

L'invention propose une solution nouvelle qui ne présente pas des inconvénients de l'art antérieur, sous la forme d'un procédé de réception d'un signal optique comprenant une étape de détection cohérente dudit signal optique, délivrant un signal multiporteuse reçu, et une étape de traitement dudit signal multiporteuse reçu comprenant une étape d'estimation d'un décalage en fréquence affectant le signal multiporteuse reçu par rapport à un signal multiporteuse d'émission correspondant, ledit décalage étant strictement supérieur à l'espacement inter-porteuses du signal multiporteuse d'émission.

Selon l'invention, l'étape d'estimation met en oeuvre deux sous-étapes comprenant :

- une sous-étape de détermination de la partie entière du décalage en fréquence, égale à un multiple de l'espacement inter-porteuses ;
- une sous-étape de détermination de la partie fractionnaire du décalage en fréquence, égale à une fraction de l'espacement inter-porteuses ;

la sous-étape de détermination de la partie entière du décalage en fréquence mettant en oeuvre une mesure, dans le domaine spectral, d'un décalage entre la position d'au moins une porteuse spécifique du signal multiporteuse d'émission et la position de la ou des porteuses spécifiques correspondantes dans le signal multiporteuse reçu.

L'invention propose ainsi une nouvelle solution pour l'estimation du décalage en fréquence permettant d'estimer précisément ce décalage quelle que soit sa valeur, et notamment lorsqu'il est très grand par rapport à l'espace inter-porteuses $\Delta f$ du signal multiporteuse (au delà de 1 GHz par exemple).

En particulier, la technique proposée est simple à implémenter, et peu coûteuse en puissance de calculs.

Considérant que le décalage en fréquence $\Delta_{CFO}$ peut se décomposer en une partie fractionnaire $\alpha$ égale à une fraction de l'espacement $\Delta f$ entre deux sous porteuses ($\alpha < 1$), et en une partie entière $n$ ($n$ est entier positif ou négatif, $n > 1$, qui peut être au delà de 1 GHz), la technique proposée repose sur un traitement en deux passes, délivrant au cours d'une passe la partie entière $n$ du décalage en fréquence et au cours de l'autre passe la partie fractionnaire $\alpha$ du décalage en fréquence. Ces deux passes peuvent être mises en oeuvre simultanément ou successivement, dans n'importe quel ordre.

En particulier, les porteuses spécifiques appartiennent au groupe comprenant :

- une porteuse pilote, dont la position dans le signal multiporteuse d'émission est connue d'au moins un récepteur mettant en oeuvre le procédé de traitement ;
- une porteuse résiduelle, dont la fréquence correspond à une fréquence d'émission d'un signal, après combinaison des composantes en phase et en quadrature du signal multiporteuse d'émission ;
- une porteuse utile comprenant la première ou la dernière sous-porteuse portant des données utiles dans le signal multiporteuse d'émission.

Ces porteuses spécifiques sont ainsi facilement identifiables dans le signal reçu, dans le domaine spectral, et il est possible de mesurer simplement le décalage entre la position de la ou des porteuses spécifiques dans le signal multiporteuse d'émission et la position de la ou des porteuses spécifiques correspondantes dans le signal reçu.

Par exemple, si on se place dans le contexte d'une transmission optique, selon un premier mode de réalisation, la porteuse spécifique peut être le pilote RF tel que présenté en relation avec l'art antérieur. Selon un deuxième mode de réalisation, la porteuse spécifique peut être une porteuse optique résiduelle, dont la fréquence correspond à une fréquence d'émission d'un signal optique, après combinaison des composantes en phase et en quadrature du signal multiporteuse d'émission. Selon un troisième mode de réalisation, la porteuse spécifique est la première ou la dernière sous-porteuse portant des données utiles dans le signal multiporteuse d'émission.

Bien entendu, ces différents modes de réalisation peuvent être combinés.

Selon un premier exemple de réalisation, le procédé de réception comprend une étape de détection, dans le signal multiporteuse reçu dans le domaine spectral, d'au moins un pic de puissance supérieur à un seuil prédéterminé, délivrant la position de la porteuse spécifique dans le signal multiporteuse reçu.

Selon un deuxième exemple de réalisation, le procédé de réception comprend une étape de détection, dans le signal multiporteuse reçu dans le domaine spectral, d'un écart de puissance entre deux porteuses successives supérieur à un seuil prédéterminé, délivrant la position de la porteuse spécifique dans le signal multiporteuse reçu.

On obtient ainsi facilement et rapidement la position de la porteuse spécifique dans le signal multiporteuse reçu en utilisant des opérations classiques de traitement du signal.

Selon une autre caractéristique de l'invention, la sous-étape de détermination de la partie fractionnaire du décalage en fréquence met en oeuvre une comparaison entre au moins deux symboles multiporteuses du signal multiporteuse reçu, correspondant à des symboles multiporteuses identiques à l'émission.

La partie fractionnaire du décalage en fréquence peut ainsi être déterminée de manière classique, comme présenté en relation avec l'art antérieur.

L'invention propose ainsi selon au moins un mode de réalisation d'estimer le décalage en fréquence affectant le signal multiporteuse reçu en combinant une technique classique pour déterminer la partie fractionnaire du décalage en fréquence et une technique originale pour déterminer la partie entière du décalage en fréquence.

En particulier, le procédé de réception selon l'invention comprend une étape de compensation du décalage en fréquence, mettant en oeuvre une sommation de la partie entière et de la partie fractionnaire, une transformation du résultat de la sommation du domaine spectral vers le domaine temporel, et une multiplication du signal multiporteuse reçu par la transformation du résultat de la sommation dans le domaine temporel.

L'invention permet ainsi de compenser le décalage en fréquence affectant le signal multiporteuse reçu, quelle que soit la valeur de ce décalage, et notamment si cette valeur est grande par rapport à l'espacement entre deux porteuses du signal multiporteuse d'émission.

Bien entendu, les différentes caractéristiques de ce procédé de traitement peuvent être combinées.

La technique proposée est notamment bien adaptée à l'estimation et la compensation du décalage en fréquence affectant un signal multiporteuse dans un système optique de transmission WDM longue distance utilisant la modulation OFDM avec détection cohérente hétérodyne.

Un autre aspect de l'invention concerne un programme d'ordinateur comportant des instructions pour la mise en oeuvre d'un procédé de traitement et/ou d'un procédé de réception tels que décrit précédemment lorsque ce (ou ces) programme(s) est (sont) exécuté(s) par un processeur.

Les procédés de traitement et de réception selon l'invention peuvent donc être mis en oeuvre de diverses manières, notamment sous forme logicielle (« software ») ou sous forme matérielle (« hardware »), dans un ASIC par exemple (en français « circuit intégré propre à une application », en anglais « Application-Specific Integrated Circuit »).

Dans un autre mode de réalisation, l'invention concerne un dispositif de réception d'un signal optique comprenant des moyens de détection cohérente dudit signal optique, délivrant un signal multiporteuse reçu, et des moyens de traitement dudit signal multiporteuse reçu comprenant des moyens d'estimation d'un décalage en fréquence affectant le signal multiporteuse reçu par rapport à un signal multiporteuse d'émission correspondant, ledit décalage étant strictement supérieur à l'espacement inter-porteuses du signal multiporteuse d'émission.

Selon l'invention, les moyens d'estimation comprennent :

- des moyens de détermination de la partie entière du décalage en fréquence, égale à un multiple de l'espacement inter-porteuses ;
- des moyens de détermination de la partie fractionnaire du décalage en fréquence, égale à une fraction de l'espacement inter-porteuses ;

et les moyens de détermination de la partie entière du décalage en fréquence comprennent des moyens de mesure, dans le domaine spectral, d'un décalage entre la position d'au moins une porteuse spécifique du signal multiporteuse d'émission et la position de la ou des porteuses spécifiques correspondantes dans le signal multiporteuse reçu.

Un tel dispositif de réception est notamment adapté à mettre en oeuvre le procédé de réception décrit précédemment. Il s'agit par exemple d'un module d'estimation et de compensation d'un décalage en fréquence (CFO) d'une chaîne de réception. Il peut également être intégré à un récepteur, apte à recevoir notamment un signal optique.

Ce dispositif pourra bien sûr comporter les différentes caractéristiques relatives au procédé de traitement selon l'invention, qui peuvent être combinées ou prises isolément. Ainsi, les caractéristiques et avantages de ce dispositif sont les mêmes que ceux du procédé de traitement décrit précédemment. Par conséquent, ils ne sont pas détaillés plus amplement.

En particulier, le traitement du signal reçu peut être réalisé hors ligne (en anglais « off-line ») ou en temps réel, de manière logicielle ou matérielle.

La technique proposée est ainsi facile à implémenter, et ne nécessite pas l'utilisation de composants supplémentaires pour la mettre en oeuvre. Comme déjà indiqué, elle permet de recouvrer des décalages en fréquence de grande ampleur, et notamment de l'ordre de 1 GHz.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, présentée en relation avec l'art antérieur, illustre un exemple de chaîne de transmission d'un signal optique mettant en oeuvre une technique de détection cohérente en réception ;
- la figure 2 décrit les principales étapes mises en oeuvre par le procédé de traitement selon l'invention ;
- la figure 3 illustre le spectre d'un signal OFDM en sortie d'un modulateur IQ électro-optique ;
- la figure 4 illustre la superposition des spectres du signal OFDM à l'émission et à la réception ;
- la figure 5 présente la structure d'un dispositif de traitement mettant en oeuvre une technique de traitement du signal multiporteuse reçu selon un mode de réalisation particulier de l'invention.

## 5. Description d'un mode de réalisation de l'invention

Le principe général de l'invention repose sur l'estimation en deux passes du décalage en fréquence affectant un signal multiporteuse reçu, l'une des passes permettant de déterminer de façon tout à fait originale la partie entière de ce décalage en fréquence et l'autre passe permettant de déterminer classiquement la partie fractionnaire de ce décalage en fréquence.

La technique proposée peut s'appliquer à tout système de transmission mettant en oeuvre une modulation multiporteuse, de type OFDM, BFDM (pour « Bi-Orthogonal Frequency-Division Multiplexing ») ou OFDM avancée par exemple, pour lequel un décalage en fréquence $\Delta_{CFO}$, supérieur à l'espace entre deux porteuses du signal multiporteuse d'émission, affecte le signal multiporteuse reçu par rapport au signal multiporteuse d'émission correspondant.

En particulier, la technique proposée utilise les porteuses classiques d'un signal multiporteuse et ne nécessite pas l'insertion d'un intervalle de garde dans le signal multiporteuse d'émission, ce qui permet d'optimiser l'efficacité spectrale du signal émis.

L'invention trouve notamment des applications dans les transmissions optiques WDM longue distance utilisant la modulation OFDM avec une détection cohérente hétérodyne. Toutefois, l'invention ne se limite pas aux transmissions optiques, et trouve également des applications dans les transmissions radiofréquences.

On présente désormais, en relation avec la figure 2, les principales étapes mises en oeuvre par le procédé de réception d'un signal multiporteuse reçu selon l'invention.

Un tel procédé de réception comprend une étape d'estimation 21 d'un décalage en fréquence $\Delta_{CFO}$ affectant le signal multiporteuse reçu par rapport à un signal multiporteuse d'émission correspondant, tel que $\Delta_{CFO} > \Delta f$, avec $\Delta f$ l'espacement inter-porteuses du signal multiporteuse d'émission.

Comme illustré en figure 2, l'étape d'estimation 21 met en oeuvre deux sous-étapes comprenant :

- une sous-étape de détermination 211 de la partie entière n du décalage en fréquence, égale à un multiple de l'espacement inter-porteuses ;
- une sous-étape de détermination 212 de la partie fractionnaire $\alpha$ du décalage en fréquence, égale à une fraction de l'espacement inter-porteuses.

On a donc $\Delta_{CFO} = (\alpha + n)$, ou encore $\Delta_{CFO} \times \frac{T_S}{N_{Sc}} = (\alpha + n) \times \Delta f$ le décalage en fréquence relatif, avec $T_S$ le temps d'un symbole du signal multiporteuse d'émission et $N_{Sc}$ le nombre de porteuses du signal multiporteuse d'émission.

Par exemple, la sous-étape de détermination 212 de la partie fractionnaire $\alpha$ du décalage en fréquence $\Delta_{CFO}$, effectuée avant ou après la sous-étape de détermination 211 de la partie entière $n$ du décalage en fréquence, met en oeuvre une comparaison d'au moins deux symboles multiporteuses du signal multiporteuse reçu, correspondant à des symboles multiporteuses identiques à l'émission, selon la technique décrite en relation avec l'art antérieur. D'autres techniques connues permettant de déterminer la partie fractionnaire $\alpha$ du décalage en fréquence $\Delta_{CFO}$ peuvent également être mises en oeuvre.

La sous-étape de détermination 211 de la partie entière n du décalage en fréquence met quant à elle en oeuvre une mesure, dans le domaine spectral, d'un décalage entre la position d'au moins une porteuse spécifique du signal multiporteuse d'émission et la position de la ou des porteuses spécifiques correspondantes dans le signal multiporteuse reçu.

Par exemple, une telle porteuse spécifique appartient au groupe comprenant :

- une porteuse pilote, dont la position dans le signal multiporteuse d'émission est connue d'au moins un récepteur mettant en oeuvre le procédé de réception ;
- une porteuse résiduelle, dont la fréquence correspond à une fréquence d'émission d'un signal, après combinaison des composantes en phase et en quadrature du signal multiporteuse d'émission ;
- une porteuse utile comprenant la première ou la dernière sous-porteuse portant des données utiles dans le signal multiporteuse d'émission (porteuse en bord de bande).

On se place ci-après, à titre d'exemple illustratif et non limitatif, dans le domaine des transmissions optiques, selon la chaîne de transmission de la figure 1, et on considère un signal multiporteuse d'émission tel qu'illustré en figure 3. Plus précisément, la figure 3 représente le spectre d'un signal OFDM à la sortie d'un modulateur IQ (puissance du signal OFDM, en dBm, en fonction de la fréquence, en GHz).

On constate sur cette figure 3 que le signal OFDM présente des particularités. Par exemple, le résidu de la porteuse optique présente une puissance supérieure à celle des autres porteuses OFDM. Le résidu de la porteuse optique 31 est donc visible au milieu du spectre du signal OFDM. De même, les porteuses utiles 32 présentent une puissance supérieure à celle des porteuses modulées par une valeur nulle. On peut donc distinguer les porteuses utiles 32 des porteuses nulles.

Il est ainsi possible d'identifier des porteuses spécifiques, correspondant par exemple à la porteuse résiduelle optique 31, à la première porteuse 321 portant des données utiles dans le signal OFDM, à la dernière porteuse 322 portant des données utiles dans le signal OFDM, ou encore à une porteuse pilote (non illustrée sur la figure 3), et de déterminer les indices de ces porteuses.

Par exemple, on considère que la porteuse résiduelle optique 31, apparaissant au milieu du spectre du signal OFDM d'émission, porte l'indice 0.

On considère également, selon cet exemple illustratif et non limitatif, que le procédé de réception selon l'invention est mis en oeuvre dans le module CFO 18 illustré en figure 1. Le signal multiporteuse reçu correspond donc au signal obtenu après les étapes de détection cohérente 16 et de synchronisation 17 illustrées en figure 1.

Selon l'invention, afin d'estimer la partie entière du décalage en fréquence $\Delta_{CFO}$ affectant le signal multiporteuse reçu par rapport à un signal multiporteuse d'émission correspondant, on mesure, dans le domaine spectral, un décalage entre la position d'au moins une porteuse spécifique du signal multiporteuse d'émission et la position de la ou des porteuses spécifiques correspondantes dans le signal multiporteuse reçu.

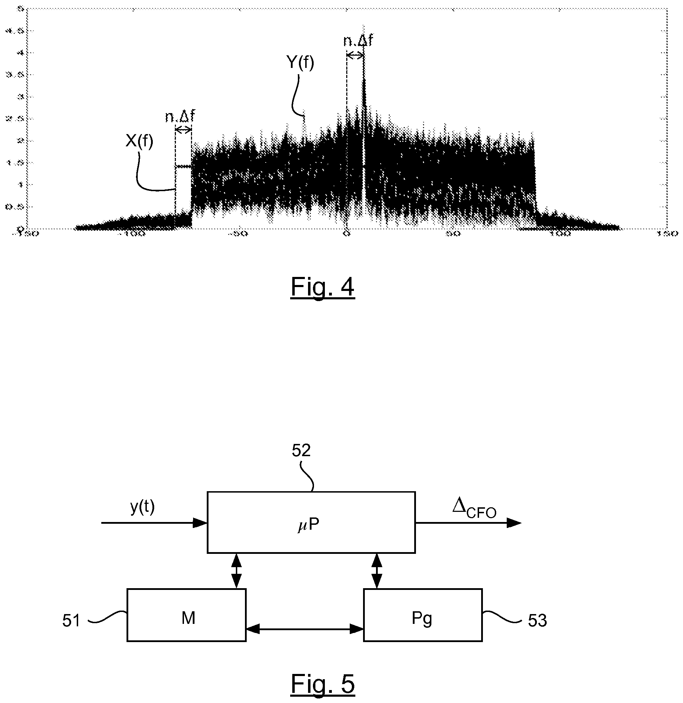

Pour ce faire, on compare les spectres du signal multiporteuse d'émission, noté $X(f)$, et du signal multiporteuse reçu, noté $Y(f)$, en bande de base, comme illustré en figure 4.

Selon un premier exemple illustré en figure 4, on mesure le décalage entre la position de la porteuse résiduelle optique 31 du signal OFDM et la position de la porteuse correspondante dans le signal multiporteuse reçu. On note qu'après détection homodyne (où un même laser est utilisé à l'émission et à la réception) la porteuse optique est située sur la première porteuse en bande de base du signal OFDM. En revanche, après détection hétérodyne, le résidu de la porteuse optique est repéré sur une autre fréquence, qu'il faut identifier. On rappelle également que la détermination de la partie entière du décalage en fréquence *n* est mise en oeuvre dans le domaine fréquentiel ou spectral, après la transformée de Fourier. On observe alors la densité spectrale de puissance du signal multiporteuse reçu. Comme le montre la figure 4, un pic de puissance correspondant au résidu de la porteuse optique apparaît à la fréquence d'indice *n*. En bande de base, et après correction de la partie fractionnaire, l'écart entre la première sous-porteuse d'indice 0, correspondant à la position de la porteuse optique résiduelle dans le signal multiporteuse d'émission, et la sous-porteuse d'indice *n*, localisée à l'emplacement de la porteuse optique résiduelle dans le signal multiporteuse reçu, donne la partie entière du décalage en fréquence *n*.

En d'autres termes, on regarde selon ce premier exemple comment s'est déplacé le centre du spectre du signal multiporteuse d'émission.

Selon un deuxième exemple, également illustré en figure 4, on mesure le décalage entre la position de la première (respectivement dernière) sous-porteuse 321 portant des données utiles dans le signal OFDM et la position de la porteuse correspondante dans le signal multiporteuse reçu. On cherche selon cet exemple à récupérer la position spectrale de la première (respectivement dernière) sous-porteuse utile (c'est-à-dire non-nulle) localisée juste après (respectivement avant) les sous-porteuses mises à zéro. La comparaison de l'indice de cette première (respectivement dernière) sous-porteuse, qui porte encore de l'information, avec l'indice correspondant à l'émission, donne la partie entière du décalage en fréquence n.

En d'autres termes, on regarde selon ce deuxième exemple comment s'est déplacé un bord du spectre du signal multiporteuse d'émission.

Selon un troisième exemple, non illustré, on mesure le décalage entre la position d'une porteuse pilote et la position de la porteuse correspondante dans le signal multiporteuse reçu. La localisation spectrale du décalage en fréquence de la porteuse pilote selon ce troisième exemple est réalisée de la même façon que selon le premier exemple.

En d'autres termes, on regarde selon ce troisième exemple comment s'est déplacé un pilote du signal multiporteuse d'émission.

Comme déjà indiqué, ces trois modes de réalisation peuvent être mis en oeuvre isolément, ou éventuellement combinés pour améliorer les performances du système.

En particulier, afin de déterminer la position de la ou des porteuse(s) spécifique(s) dans le signal multiporteuse reçu, différentes techniques peuvent être mises en oeuvre.

Selon une première technique, on détermine la position de la ou des porteuse(s) spécifique(s) en détectant, dans le signal multiporteuse reçu dans le domaine spectral, au moins un pic de puissance supérieur à un seuil prédéterminé.

En effet, les porteuses pilotes ou la porteuse résiduelle optique présentent généralement un niveau de puissance supérieur aux autres porteuses utiles. Les porteuses du signal multiporteuse reçu associées à un pic de puissance peuvent donc être considérées comme des porteuses spécifiques.

Selon une deuxième technique, on détermine la position de la ou des porteuse(s) spécifique(s) en détectant, dans le signal multiporteuse reçu dans le domaine spectral, un écart de puissance entre deux porteuses successives supérieur à un seuil prédéterminé.

En effet, puisque les porteuses utiles présentent un niveau de puissance supérieur aux porteuses nulles, et puisque les porteuses pilotes ou la porteuse résiduelle optique présentent un niveau de puissance supérieur aux porteuses utiles, il existe un écart de puissance entre les porteuses nulles et les porteuses portant des données utiles, ou entre les porteuses portant des données utiles et les porteuses pilotes, ou encore entre les porteuses portant des données utiles et la porteuse optique résiduelle.

Il est ainsi possible de détecter une porteuse spécifique lorsqu'elle présente un écart de puissance avec une porteuse voisine supérieur à un seuil prédéterminé.

Bien entendu, d'autres techniques sont également envisageables pour déterminer la position des porteuses spécifiques dans le signal multiporteuse reçu.

A l'issue de ces étapes, on obtient ainsi la partie entière *n* du décalage en fréquence $\Delta_{CFO}$.

Une fois que la partie entière *n* du décalage en fréquence $\Delta_{CFO}$ est déterminée, la correction du signal multiporteuse reçu est mise en oeuvre dans le domaine temporel, en multipliant le signal multiporteuse reçu par l'expression

$$e^{-j2\pi.\frac{p.\epsilon}{Nsc}}, \text{ avec } \epsilon = \Delta_{CFO} \times T_s = (\alpha + n) \times T_s.$$

En d'autres termes, selon un exemple de mise en oeuvre, le procédé de réception selon l'invention comprend une étape de compensation du décalage en fréquence, mettant en oeuvre une sommation de la partie entière et de la partie fractionnaire, une transformation du résultat de la sommation du domaine spectral vers le domaine temporel, et une multiplication du signal multiporteuse reçu par la transformation du résultat de la sommation dans le domaine temporel.

On présente finalement, en relation avec la figure 5, la structure simplifiée d'un dispositif de traitement mettant en oeuvre une technique de traitement d'un signal multiporteuse reçu selon un mode de réalisation particulier décrit ci-dessus.

Un tel dispositif comprend une mémoire 51 comprenant une mémoire tampon, une unité de traitement 52, équipée par exemple d'un microprocesseur μP, et pilotée par le programme d'ordinateur 53, mettant en oeuvre le procédé de réception selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée un signal multiporteuse. Le microprocesseur de l'unité de traitement 52 met en oeuvre les étapes du procédé de réception décrit précédemment, selon les instructions du programme d'ordinateur 53, pour estimer le décalage en fréquence affectant le signal multiporteuse reçu par rapport au signal multiporteuse d'émission correspondant. Pour cela, le dispositif de traitement comprend, outre la mémoire tampon 51, des moyens d'estimation d'un décalage en fréquence comprennent des moyens de détermination de la partie entière du décalage en fréquence et des moyens de détermination de la partie fractionnaire du décalage en fréquence, tels que les moyens de détermination de la partie entière du décalage en fréquence comprennent des moyens de mesure, dans le domaine spectral, d'un décalage entre la position d'au moins une porteuse spécifique du signal multiporteuse d'émission et la position de la ou des porteuses spécifiques correspondantes dans le signal multiporteuse reçu. Ces moyens sont pilotés par le microprocesseur de l'unité de traitement 52.

L'invention concerne également un récepteur comprenant un tel dispositif de traitement. Un tel récepteur est notamment apte à recevoir un signal optique, et comprend, en plus du dispositif de traitement, des moyens de détection cohérente du signal optique.

## Revendications

1. Procédé de réception d'un signal optique comprenant :

    - une étape de détection cohérente dudit signal optique, délivrant un signal multiporteuse reçu, et
    - une étape de traitement dudit signal multiporteuse reçu, comprenant une étape d'estimation (21) d'un décalage en fréquence affectant ledit signal multiporteuse reçu par rapport à un signal multiporteuse d'émission correspondant,

    ledit décalage étant strictement supérieur à l'espacement inter-porteuses dudit signal multiporteuse d'émission, **caractérisé en ce que** ladite étape d'estimation (21) met en oeuvre deux sous-étapes comprenant:

    - une sous-étape de détermination (211) de la partie entière du décalage en fréquence, égale à un multiple dudit espacement inter-porteuses ;
    - une sous-étape de détermination (212) de la partie fractionnaire du décalage en fréquence, égale à une fraction dudit espacement inter-porteuses ;

    et **en ce que** ladite sous-étape de détermination de la partie entière (211) du décalage en fréquence met en oeuvre une mesure, dans le domaine spectral, d'un décalage entre la position d' une porteuse optique résiduelle dudit signal multiporteuse d'émission, dont la fréquence correspond à une fréquence d'émission dudit signal optique, après combinaison des composantes en phase et en quadrature dudit signal multiporteuse d'émission, et la position de la porteuse optique résiduelle correspondante dans ledit signal multiporteuse reçu.

2. Procédé de réception selon la revendication 1, **caractérisé en ce qu'**il comprend une étape de détection, dans ledit signal multiporteuse reçu dans le domaine spectral, d'au moins un pic de puissance supérieur à un seuil prédéterminé, délivrant la position de ladite porteuse optique résiduelle dans ledit signal multiporteuse reçu.

3. Procédé de réception selon la revendication 1, **caractérisé en ce qu'**il comprend une étape de détection, dans ledit signal multiporteuse reçu dans le domaine spectral, d'un écart de puissance entre deux porteuses successives supérieur à un seuil prédéterminé, délivrant la position de ladite porteuse optique résiduelle dans ledit signal multiporteuse reçu.

4. Procédé de réception selon la revendication 1, **caractérisé en ce que** ladite sous-étape de détermination de la partie fractionnaire (212) du décalage en fréquence, met en oeuvre une comparaison entre au moins deux symboles multiporteuses dudit signal multiporteuse reçu, correspondant à des symboles multiporteuses identiques à l'émission.

**5.** Procédé de réception selon la revendication 1, **caractérisé en ce qu'**il comprend une étape de compensation dudit décalage en fréquence, mettant en oeuvre une sommation de ladite partie entière et de ladite partie fractionnaire, une transformation du résultat de ladite sommation du domaine spectral vers le domaine temporel, et une multiplication dudit signal multiporteuse reçu par la transformation du résultat de ladite sommation dans le domaine temporel.

**6.** Programme d'ordinateur comportant des instructions pour la mise en oeuvre d'un procédé selon la revendication 1 lorsque ce programme est exécuté par un processeur.

**7.** Dispositif de réception d'un signal optique comprenant des moyens de détection cohérente dudit signal optique, délivrant un signal multiporteuse reçu, et des moyens de traitement dudit signal multiporteuse reçu comprenant des moyens d'estimation (21) d'un décalage en fréquence affectant ledit signal multiporteuse reçu par rapport à un signal multiporteuse d'émission correspondant,
ledit décalage étant strictement supérieur à l'espacement inter-porteuses dudit signal multiporteuse d'émission,
**caractérisé en ce que** lesdits moyens d'estimation (21) comprennent:

- des moyens de détermination (211) de la partie entière du décalage en fréquence, égale à un multiple dudit espacement inter-porteuses ;
- des moyens de détermination (212) de la partie fractionnaire du décalage en fréquence, égale à une fraction dudit espacement inter-porteuses ;

et **en ce que** lesdits moyens de détermination (211) de la partie entière du décalage en fréquence comprennent des moyens de mesure, dans le domaine spectral, d'un décalage entre la position d' une porteuse optique résiduelle dudit signal multiporteuse d'émission, dont la fréquence correspond à une fréquence d'émission dudit signal optique, après combinaison des composantes en phase et en quadrature dudit signal multiporteuse d'émission, et la position de la porteuse optique résiduelle correspondante dans ledit signal multiporteuse reçu.

**Patentansprüche**

**1.** Verfahren zum Empfangen eines optischen Signals, das Folgendes umfasst:

- einen Schritt des kohärenten Detektierens des optischen Signals, der ein empfangenes Mehrfachträgersignal liefert und
- einen Schritt des Verarbeitens des empfangenen Mehrfachträgersignals, der einen Schritt (21) des Schätzens einer das empfangene Mehrfachträgersignal beeinflussenden Frequenzverschiebung in Bezug auf ein entsprechendes Sende-Mehrfachträgersignal umfasst, wobei die Verschiebung streng größer als der Zwischenträgerabstand des Sende-Mehrfachträgersignals ist,

**dadurch gekennzeichnet, dass** der Schätzschritt (21) zwei Unterschritte ausführt, die Folgendes umfassen:

- einen Unterschritt (211) des Bestimmens der gesamten Frequenzverschiebung, die gleich einem Vielfachen des Zwischenträgerabstands ist;
- einen Unterschritt (212) des Bestimmens des Bruchteils der Frequenzverschiebung, der gleich einem Bruchteil des Zwischenträgerabstands ist;

und dass der Unterschritt (211) des Bestimmens der gesamten Frequenzverschiebung eine Messung im Spektralbereich einer Verschiebung zwischen der Position eines optischen Restträgers des Sende-Mehrfachträgersignals, dessen Frequenz einer Sendefrequenz des optischen Signals entspricht, nachdem Inphase- und Quadraturkomponenten des Sende-Mehrfachträgersignals kombiniert worden sind, und der Position des entsprechenden optischen Restträgers in dem empfangenen Mehrfachträgersignal ausführt.

**2.** Empfangsverfahren nach Anspruch 1, **dadurch gekennzeichnet, dass** es einen Schritt des Detektierens in dem empfangenen Mehrfachträgersignal im Spektralbereich wenigstens einer Leistungsspitze, die größer als ein vorgegebener Schwellenwert ist, umfasst, der die Position des optischen Restträgers in dem empfangenen Mehrfachträgersignal liefert.

**3.** Empfangsverfahren nach Anspruch 1, **dadurch gekennzeichnet, dass** es einen Schritt des Detektierens in dem empfangenen Mehrfachträgersignal im Spektralbereich eines Leistungsabstands zwischen zwei aufeinander folgenden Trägern, der größer als ein vorgegebener Schwellenwert ist, umfasst, der die Position des optischen Restträgers in dem empfangenen Mehrfachträgersignal liefert.

4. Empfangsverfahren nach Anspruch 1, **dadurch gekennzeichnet, dass** der Unterschritt (212) des Bestimmens des Bruchteils der Frequenzverschiebung einen Vergleich zwischen wenigstens zwei Mehrfachträgersymbolen des empfangenen Mehrfachträgersignals, die gleichen Mehrfachträgersymbolen beim Senden entsprechen, umfasst.

5. Empfangsverfahren nach Anspruch 1, **dadurch gekennzeichnet, dass** es einen Schritt des Kompensierens der Frequenzverschiebung umfasst, der eine Summierung der gesamten Verschiebung und des Bruchteils der Verschiebung, eine Transformation des Ergebnisses der Summierung des Spektralbereichs in den Zeitbereich und eine Multiplikation des empfangenen Mehrfachträgersignals mit der Transformation des Ergebnisses der Summierung in den Zeitbereich umfasst.

6. Computerprogramm, das Befehle enthält, um ein Verfahren nach Anspruch 1 auszuführen, wenn dieses Programm von einem Prozessor abgearbeitet wird.

7. Vorrichtung zum Empfangen eines optischen Signals, die Mittel zum kohärenten Detektieren des optischen Signals, die ein empfangenes Mehrfachträgersignal liefern, und Mittel zum Verarbeiten des empfangenen Mehrfachträgersignals, die Mittel (21) zum Schätzen einer das empfangene Mehrfachträgersignal beeinflussenden Frequenzverschiebung in Bezug auf ein entsprechendes Sende-Mehrfachträgersignal enthalten, umfasst, wobei die Verschiebung streng größer als der Zwischenträgerabstand des Sende-Mehrfachträgersignals ist, **dadurch gekennzeichnet, dass** die Schätzmittel (21) Folgendes umfassen:

- Mittel (211) zum Schätzen der gesamten Frequenzverschiebung, der gleich einem Vielfachen des Zwischenträgerabstands ist;
- Mittel (212) zum Bestimmen des Bruchteils der Frequenzverschiebung, der gleich einem Bruchteil des Zwischenträgerabstands ist;

und dass die Mittel (211) zum Bestimmen der gesamten Frequenzverschiebung Mittel umfassen, um im Spektralbereich eine Verschiebung zwischen der Position eines optischen Restträgers des Sende-Mehrfachträgersignals, dessen Frequenz einer Sendefrequenz des optischen Signals entspricht, nachdem Inphase-Komponenten und Quadraturkomponenten des Sende-Mehrfachträgersignals kombiniert worden sind, und der Position des entsprechenden optischen Restträgers in dem empfangenen Mehrfachträgersignal zu messen.

## Claims

1. Method of receiving an optical signal comprising:

- a step of coherent detection of said optical signal, delivering a multicarrier signal received, and
- a step of processing said multicarrier signal received, comprising a step (21) of estimating a frequency shift affecting said multicarrier signal received with respect to a corresponding emission multicarrier signal,

said shift being strictly greater than the inter-carrier spacing of said emission multicarrier signal, **characterized in that** said estimating step (21) implements two substeps comprising:

- a substep (211) of determining the integer part of the frequency shift, equal to a multiple of said inter-carrier spacing;
- a substep (212) of determining the fractional part of the frequency shift, equal to a fraction of said inter-carrier spacing;

and **in that** said substep of determining the integer part (211) of the frequency shift implements a measurement, in the spectral domain, of a shift between the position of a residual optical carrier of said emission multicarrier signal, whose frequency corresponds to an emission frequency of said optical signal, after combining the in-phase and quadrature components of said emission multicarrier signal, and the position of the corresponding residual optical carrier in said multicarrier signal received.

2. Method of receiving according to Claim 1, **characterized in that** it comprises a step of detecting, in said multicarrier signal received in the spectral domain, at least one power peak greater than a predetermined threshold, delivering the position of said residual optical carrier in said multicarrier signal received.

3. Method of receiving according to Claim 1, **characterized in that** it comprises a step of detecting, in said multicarrier signal received in the spectral domain, a power offset of greater than a predetermined threshold between two successive carriers, delivering the position of said residual optical carrier in said multicarrier signal received.

4. Method of receiving according to Claim 1, **characterized in that** said substep of determining the fractional part (212) of the frequency shift, implements a comparison between at least two multicarrier symbols of said multicarrier signal received, corresponding to identical multicarrier symbols on emission.

5. Method of receiving according to Claim 1, **characterized in that** it comprises a step of compensating said frequency shift, implementing a summation of said integer part and of said fractional part, a transformation of the result of said summation from the spectral domain to the time domain, and a multiplication of said multicarrier signal received by the transformation of the result of said summation in the time domain.

6. Computer program comprising instructions for the implementation of a method according to Claim 1 when this program is executed by a processor.

7. Device for receiving an optical signal comprising means of coherent detection of said optical signal, delivering a multicarrier signal received, and means for processing said multicarrier signal received comprising means (21) for estimating a frequency shift affecting said multicarrier signal received with respect to a corresponding emission multicarrier signal,
said shift being strictly greater than the inter-carrier spacing of said emission multicarrier signal, **characterized in that** said estimating means (21) comprise:

- means (211) for determining the integer part of the frequency shift, equal to a multiple of said inter-carrier spacing;
- means (212) for determining the fractional part of the frequency shift, equal to a fraction of said inter-carrier spacing;

and **in that** said means (211) for determining the integer part of the frequency shift comprise means for measuring, in the spectral domain, a shift between the position of a residual optical carrier of said emission multicarrier signal, whose frequency corresponds to an emission frequency of said optical signal, after combining the in-phase and quadrature components of said emission multicarrier signal, and the position of the corresponding residual optical carrier in said multicarrier signal received.

Fig. 1

Fig. 2

Fig. 3

n.Δf

Y(f)

n.Δf

X(f)

## Fig. 4

y(t) → | 52 μP | → Δ_CFO

51 — M ↔ Pg — 53

## Fig. 5

## EP 2 837 150 B1

### RÉFÉRENCES CITÉES DANS LA DESCRIPTION

**Documents brevets cités dans la description**

- EP 2079212 A

- US 2011002422 A

**Littérature non-brevet citée dans la description**

- **F. BUCHALI et al.** Improved frequency offset correction in coherent optical OFDM systems. *ECOC 2008,* 2008, vol. 1, 105-106